# EUROPÄISCHE PATENTSCHRIFT

(11) **EP 1 848 070 B1**
(45) Veröffentlichungstag und Bekanntmachung des Hinweises auf die Patenterteilung: **11.11.2009**
(21) Anmeldenummer: 07001269.5
(22) Anmeldetag: 22.01.2007
(51) Int. Cl.: H01R 13/66, H01R 13/717, H01R 24/10, H01H 9/18

(54) **Elektrisches/elektronisches Installationsgerät**
Electric/electronic installation device
Appareil d'installation électrique/élect

(30) Priorität: 18.04.2006 DE 102006017915
(43) Veröffentlichungstag der Anmeldung: 24.10.2007
(73) Patentinhaber: Albrecht Jung GmbH & Co. KG, 58579 Schalksmühle (DE)
(72) Erfinder: Kandt, Richard, Dipl.-Ing., 44803 Bochum (DE); Reuter, Andrè, 45665 Recklinghausen (DE); Soleinsky, Stefan, 58566 Kierspe (DE)

(56) Entgegenhaltungen:
- EP-A- 1 385 185
- EP-A1- 1 610 422
- DE-B3- 10 246 399
- US-A- 5 670 776
- US-A1- 2003 019 732
- US-B1- 6 350 039

## Beschreibung

Die vorliegende Erfindung betrifft ein gemäß der Merkmale des Hauptanspruches konzipiertes elektrisches/elektronisches Installationsgerät für die Gebäudesystemtechnik.

Derartige elektrische/elektronische Installationsgeräte sind in der Regel als Schutzkontaktsteckdosen, Datenanschlussgeräte, Schaltgeräte, Dimmer usw. ausgeführt und zum Anschluss von elektrischen Verbrauchern und/oder zur Beeinflussung von angeschlossenen Aktoren, wie Beleuchtungseinrichtungen, Rollladensteuerungen, Jalousiesteuerungen, Heizungsreglern usw. vorgesehen. Gegebenenfalls sind solche elektrischen/elektronischen Installationsgeräte mit einer Beleuchtungseinrichtung ausgerüstet.

Ein elektrisches/elektronisches Installationsgerät des Standes der Technik ist durch die DE 10 2004 028 546 B3 bekannt geworden. Dieses als elektrische Schutzkontaktsteckdose ausgeführte Installationsgerät ist mit einem, die Kontaktierung eines Steckerteils und der anzuschließenden elektrischen Kabel notwendigen Kontaktteile aufweisenden Sockelteil versehen, an welchem ein Steckdosenzentralstück befestigbar ist. Außerdem ist dieses Installationsgerät mit einer Beleuchtungseinrichtung ausgerüstet. Bei einer derartigen Ausgestaltung ist für die Unterbringung des Lichtauskoppelbereiches der Beleuchtungseinrichtung neben der Verwendung eines Abdeckrahmens außerdem die Verwendung eines auf eine solche Beleuchtungseinrichtung speziell abgestimmten Steckdosenzentralstückes sowie eines ebenfalls speziell abgestimmten Verkleidungsteils notwendig. Dies ist nicht nur aufwendig bei der Herstellung und der Montage eines solchen elektrischen/elektronischen Installationsgerätes, sondern verursacht darüber hinaus einen hohen Logistikaufwand beim Vertrieb.

Zudem ist durch die EP 1 610 422 A1 ein elektrisches/elektronisches Installationsgerät der Gebäudesystemtechnik mit einem Abdeckrahmen bekannt geworden, welches ein an einem Tragring festgelegtes Sockelteil aufweist. Am Sockelteil ist eine zumindest ein Leuchtmittel aufweisende Beleuchtungseinrichtung festgelegt, wobei die Beleuchtungseinrichtung eine, zumindest mit einer Leuchtdiode und einem weiteren elektrischen Bauteil bestückte elektrische Leiterplatte aufweist. Diese ist von einem Gehäuse aufgenommen, welches mit seinem Basisgehäusebereich unterhalb des Tragringes angeordnet ist und an welches zumindest ein zur Aufnahme des als LED ausgebildeten Leuchtmittels vorgesehener gehäuseschlotartiger Leuchtmitteldom angeformt ist, der bis zur Oberseite des Tragringes geführt ist. Weiterhin ist ein Lichtleitelement oberhalb des Tragringes angeordnet, welches mit seinem Lichteinkoppelbereich direkt dem Leuchtmitteldom zugeordnet ist. Zudem können in einer alternativen Ausführungsform auch zwei Lichtleitelemente vorgesehen sein.

Außerdem sind durch die EP 1 385 185 A2 und die DE 102 46 399 B3 jeweils elektrische/elektronische Installationsgeräte bekannt geworden, die für eine Aufputzmontage vorgesehen sind. Diese elektrischen/elektronischen Installationsgeräte weisen schon anwendungsbedingt weder einen Abdeckrahmen noch einen Tragring auf. Beide Geräte sind mit einem beleuchtbaren Beschriftungsfeld versehen, wobei ein Installationsgerät gemäß EP 1 385 185 A2 eine Lichtkammer an seinem Gerätedeckel aufweist, in welcher ein keilförmiger Lichtleiter, eine Beschriftungsfolie und ein Abdeckschild eingesetzt sind. Das elektrische/elektronische Installationsgerät gemäß DE 102 46 399 B3 weist an seinem Gerätedeckel eine Schriftfeldkammer mit darin eingelegter Elektrolumineszensfolie auf.

Zudem ist durch die US 2003/00 19732 A1 ein elektrisches/elektronisches Installationsgerät bekannt geworden, welches eine Schalttafel mit mehreren beleuchtbaren Lichtaustrittsfenstern aufweist.

Des weiteren ist durch die US 5,570,776 ein elektrisches/elektronisches Installationsgerät bekannt geworden, welches eine beleuchtbare Schalttafel aufweist.

Außerdem ist durch die US 6,350,039 B1 ein elektrisches/elektronisches Installationsgerät bekannt geworden, welches eine beleuchtbare Schalttafel aufweist. Als Beleuchtungsvorrichtung ist eine rahmenförmige, großflächige Leiterplatte vorgesehen, welche mit einer beachtlichen Anzahl von LEDs bestückt ist. Die LEDs geben ihr Licht an einen großen Rahmen ab, welcher insgesamt als Lichtleitelement ausgebildet ist und großflächige Einkoppel- und Lichtlenkungsstrukturen mit einer hochwertigen Oberfläche aufweist.

Der vorliegenden Erfindung liegt deshalb die Aufgabe zugrunde, ein elektrisches/elektronisches Installationsgerät zu schaffen, dessen Beleuchtungseinrichtung bei besonders einfacher und platzsparender Montage als Abdeckung lediglich einen mit einem Lichtaustrittsfenster versehenen, jedoch ansonsten übliche Abmessungen bzw. übliche Ausbildungen aufweisenden Abdeckrahmen benötigt.

Diese Aufgabe wird durch die im Hauptanspruch angegebenen Merkmale gelöst.

Bei einem solchermaßen ausgebildeten elektrischen/elektronischen Installationsgerät ist besonders vorteilhaft, dass lediglich der zu verwendende Abdeckrahmen eines Installationsgeräteprogrammes für die Gebäudesystemtechnik einer Anpassung bedarf. Ein solcher Abdeckrahmen ist dann Vorteilhafterweise jedoch durchgängig für alle Installationsgerätetypen, wie Schutzkontaktsteckdosen, Datenanschlussgeräte, Schaltgeräte, Dimmer usw. verwendbar.

Des weiteren ist besonders vorteilhaft, dass eine solche Beleuchtungseinrichtung je nach Bedarf als Suchbeleuchtung, als Orientierungsbeleuchtung, als Kennzeichnungsbeleuchtung usw. ausgenutzt werden kann, ohne dass tiefgreifende Änderungen vorgenommen werden müssten. Vorteilhafterweise wird auch das Design des Installationsgeräteprogrammes nicht beeinflusst, weil lediglich im Abdeckrahmen ein nicht deutlich hervortretendes Lichtaustrittsfenster vorhanden ist, welches zudem farblich auf die Farbgestaltung des Abdeckrahmens bzw. des Installationsgerätes abgestimmt werden kann.

Weitere vorteilhafte Ausgestaltungen sind in den Unteransprüchen angegeben. Anhand zweier in den Zeichnungen näher dargestellter Ausführungsbeispiele sei der erfindungsgemäße Gegenstand näher erläutert. Dabei zeigen:

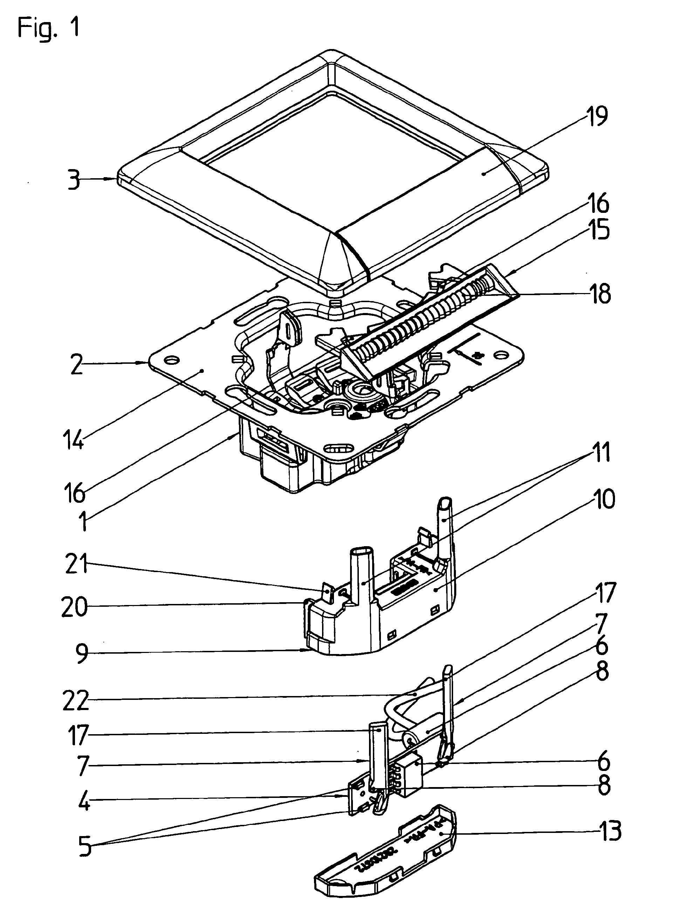

- Fig. 1:: prinziphaft ein als elektrische Steckvorrichtung ausgebildetes Installationsgerät in Explosionsdarstellung;
- Fig. 2:: prinziphaft ein als elektrisches Schaltgerät ausgebildetes Installationsgerät in Explosionsdarstellung.

Wie aus den Zeichnungen hervorgeht, besteht ein solches elektrisches/elektronisches Installationsgerät hauptsächlich aus einem Sockelteil 1, einem am Sockelteil 1 festgelegtem Tragring 2, einem Abdeckrahmen 3 und einer Beleuchtungseinrichtung.

Wie des weiteren aus den Figuren hervorgeht, weist die Beleuchtungseinrichtung eine Leiterplatte 4 auf, die mit vier Leuchtdioden 5 und mehreren anderen elektronischen Bauteilen 6 bestückt ist. Zwei Leuchtdioden 5 ist dabei jeweils ein stabförmig ausgebildetes erstes Lichtleitelement 7 zugeordnet. Die Leuchtdioden 5 stehen zur optimalen Lichteinkopplung dabei mit dem jeweiligen Lichteinkoppelbereich 8 des ihnen zugeordneten ersten Lichtleitelement 7 in direkter Wirkverbindung. Miteinander in Eingriff kommende Halteelemente an den beiden ersten Lichtleitelementen 7 und der Leiterplatte 4 gewährleisten einen exakten und sicheren Sitz. Die elektrische Leiterplatte 4 und die beiden Lichtleitelemente 7 sind zum Schutz vor Beschädigungen von einem Gehäuse 9 aufgenommen, welches aus einem Basisgehäusebereich 10 und zwei zur Aufnahme der beiden Lichtleitelemente 7 vorgesehenen Gehäuseschloten 11 besteht. Zum Verschluss des Gehäuses 9 ist ein Gehäusedeckel 13 vorgesehen. Die beiden Gehäuseschlote 11 sind mit ihren freien Endbereichen bis zur Oberseite 14 des Tragrings 2 geführt, wohingegen der Basisgehäusebereich 10 unterhalb des Tragrings zu liegen kommt und am Sockelteil 1 festgelegt ist. An der Oberseite 14 des Tragrings 2 ist ein zweites Lichtleitelement 15 festgelegt, dass zur optimalen Lichtweiterführung mit seinem Lichteinkoppelbereich 16 direkt mit den Lichtauskoppelbreichen 17 der beiden Lichtleitelemente 7 in Wirkverbindung steht. Außerdem ist der Lichtauskoppelbereich 18 des zweiten Lichtleitelementes 15 direkt einem am Abdeckrahmen 3 vorhandenen Lichtaustrittsfenster 19 zugeordnet. Das Lichtaustrittsfenster 19 ist einstückig an den Abdeckrahmen 3 angeformt und farblich auf die Farbgestaltung des Abdeckrahmens 3 abgestimmt, so dass Störungen des Designs weitestgehend verhindert sind.

An das Gehäuse 9 und an das Sockelteil 1 sind miteinander in Wirkverbindung kommende Haltemittel 20 angeformt, welche als Nut- und Federelemente ausgeführt sind. Zudem sind an das Gehäuse 9 als Rasthaken 21 ausgebildete Rastmittel angeformt, welche rastend hinter entsprechende, als Rastausnehmungen ausgebildete Rastmittel des Sockelteiles 1 zu liegen kommen.

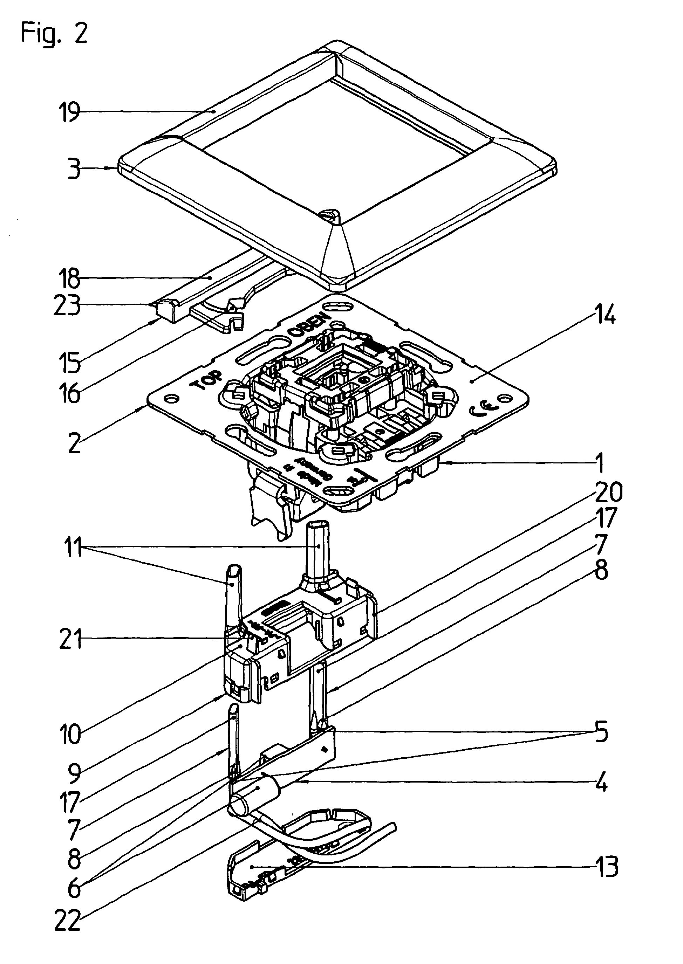

Wie insbesondere aus Figur 2 hervorgeht, ist dem zweiten Lichtleitelement 15 ein Träger 23 zugeordnet, welcher zur Aufnahme, einer - der Einfachheit halber nicht näher dargestellten - Beschriftungsfolie vorgesehen ist. Zur Einsparung von separat zu montierenden Einzelteile ist der Träger 23 einstückig an das zweite Lichtleitelement 15 angeformt. Genauso gut kann aber auch dem Lichtaustrittsfenster 19 des Abdeckrahmens 3 ein Träger 23 zur Aufnahme einer Beschriftungsfolie zugeordnet sein.

Um gegebenenfalls eine mehrfarbige Lichtabgabe über das Lichtaustrittsfenster 19 zu realisieren, können die Leuchtdioden 5 als Dreifarbenleuchtdioden ausgeführt sein. Wird eine komfortable Beeinflussung der Beleuchtungseinrichtung hinsichtlich ihrer Ansteuerung benötigt, so kann die Beeinflussung über das mit dem Installationsgerät in Verbindung stehende Bussystem erfolgen.

Zur Energieversorgung weist die Beleuchtungseinrichtung zwei flexible Anschlusskabel 22 auf, die mit ihrem freien Ende jeweils sowohl mit entsprechenden Anschlüssen des Sockelteils 1, als auch unabhängig von der Energieversorgung des elektrischen/elektronischen Installationsgerätes direkt an die Stromversorgung des Gebäudes bzw. an eine Notstromversorgung angeschlossen werden können. Ist die Beleuchtungseinrichtung über ihre flexiblen Anschlusskabel 22 an eine Notstromversorgung angeschlossen, so kann im Notfall, d. h. beim Ausfall der normalen Stromversorgung des Gebäudes, über solche elektrische/elektronische Installationsgeräte auf einfache Art und Weise eine Orientierungsbeleuchtung realisiert werden.

Selbstverständlich kann das zweite Lichtleitelement 15 mit dem Träger 23, sowie einer zugeordneten Beschriftungsfolie auch ohne dass eine Beleuchtungseinrichtung vorhanden ist am Tragring 2 festgelegt sein. Somit ist eine Beschriftung bzw. Kennzeichnung des elektrischen/elektronischen Installationsgerätes ohne eine entsprechende Beleuchtung realisiert. Besonders hervorzuheben ist, dass das zweite Lichtleitelement 15 mit dem einstückigen Träger 23 sowie der Beschriftungsfolie auch bei Abnahme des Abdeckrahmens 3 an Ort und Stelle verbleibt, so dass auch in diesem Falle eine eindeutige Kennzeichnung erhalten bleibt. Grundsätzlich ist ein Verbleib des Lichtleitelement 15 mit dem einstückigen Träger 23 sowie der Beschriftungsfolie sowohl dann vorgesehen, wenn eine Beleuchtungseinrichtung zum Einsatz kommt, als auch dann vorgesehen wenn die Beleuchtungseinrichtung nicht zum Einsatz kommt. In jedem Falle bleibt damit eine eindeutige Kennzeichnung erhalten.

Selbstverständlich können bei der Installation mehreren solcher elektrischer/elektronischer Installationsgeräte als Gruppe, auch entsprechend ausgebildete - der Einfachheit halber nicht näher dargestellte - Mehrfachabdeckrahmen Verwendung finden.

## Patentansprüche

1. Elektrisches/elektronisches Installationsgerät, insbesondere für die Gebäudesystemtechnik mit einem Abdeckrahmen (3) und einem an einem Tragring (2) festgelegten Sockelteil (1) und einer am Sockelteil (1) festgelegten, Beleuchtungseinrichtung, wobei die Beleuchtungseinrichtung eine, zumindest mit einer Leuchtdiode (5) und weiteren elektronischen Bauteilen (6) bestückte elektrische Leiterplatte (4) aufweist und wobei der Leiterplatte (4) in Wirkverbindung mit der Leuchtdiode (5) stehend, zumindest ein erstes Lichtleitelement (7) zugeordnet ist, und wobei die elektrische Leiterplatte (4) und das erste Lichtleitelement (7) von einem Gehäuse (9) aufgenommen sind, welches mit seinem Basisgehäusebereich (10) unterhalb des Tragringes (2) angeordnet ist, und an welches zumindest ein, zur Aufnahme des ersten Lichtleitelementes (7) vorgesehener Gehäuseschlot (11) angeformt ist, der bis zur Oberseite (14) des Tragringes (2) geführt ist, und wobei zumindest ein zweites Lichtleitelement (15) vorgesehen ist, welches an der Oberseite (14) des Tragrings (2) festgelegt ist und welches mit seinem Lichteinkoppelbereich (16) direkt dem ersten Lichtleitelement (7) und mit seinem Lichtauskoppelbereich (18) direkt einem, am Abdeckrahmen (3) vorhandenen, Lichtaustrittsfenster (19) zugeordnet ist.

2. Elektrisches/elektronisches Installationsgerät nach Anspruch 1, **dadurch gekennzeichnet, dass** die elektrische Leiterplatte (4) mit zumindest zwei Leuchtdioden (5) bestückt ist, und dass jeder Leuchtdiode (5) ein erstes Lichtleitelement (7) zugeordnet ist, und dass jedes der ersten Lichtleitelemente (7) von einem Gehäuseschlot (11) aufgenommen ist.

3. Elektrisches/elektronisches Installationsgerät nach Anspruch 1 oder 2, **dadurch gekennzeichnet, dass** an das Gehäuse (9) und an das Sockelteil (1) miteinander in Wirkverbindung kommende Haltemittel (20) angeformt sind.

4. Elektrisches/elektronisches Installationsgerät nach einem der Ansprüche 1 bis 3, **dadurch gekennzeichnet, dass** an das Gehäuse (9) und an das Sockelteil (1) miteinander in Wirkverbindung kommende Rastmittel (21) angeformt sind.

5. Elektrisches/elektronisches Installationsgerät nach einem der Ansprüche 1 bis 4, **dadurch gekennzeichnet, dass** zur Energieversorgung der Beleuchtungseinrichtung am Gehäuse (9), einerseits mit der elektrischen Leiterplatte (4) in Verbindung stehende und andererseits elektrisch leitend mit am Sockelteil (1) vorhandenen elektrischen Kontakteilen in Verbindung kommende, elektrische Kontaktstücke gehalten sind.

6. Elektrisches/elektronisches Installationsgerät nach einem der Ansprüche 1 bis 4, **dadurch gekennzeichnet, dass** die Beleuchtungseinrichtung zum Anschluss an eine Energieversorgung mit flexiblen Anschlusskabeln (22) versehen ist.

7. Elektrisches/elektronisches Installationsgerät nach einem der Ansprüche 1 bis 6, **dadurch gekennzeichnet, dass** dem zweiten Lichtleitelement (15) zumindest ein transparent ausgeführter Träger (23) zur Aufnahme einer Beschriftungsfolie zugeordnet ist.

8. Elektrisches/elektronisches Installationsgerät nach einem der Ansprüche 1 bis 7, **dadurch gekennzeichnet, dass** dem Lichtaustrittsfenster (19) des Abdeckrahmens (3) zumindest ein transparent ausgeführter Träger zur Aufnahme einer Beschriftungsfolie zugeordnet ist.

9. Elektrisches/elektronisches Installationsgerät nach einem der Ansprüche 1 bis 8, **dadurch gekennzeichnet, dass** die Beleuchtungseinrichtung zumindest eine als Dreifarbenleuchtdiode ausgeführte Leuchtdiode (5) aufweist.

10. Elektrisches/elektronisches Installationsgerät nach einem der Ansprüche 1 bis 9, **dadurch gekennzeichnet, dass** zumindest eine Leuchtdiode (5) der Beleuchtungseinrichtung mit einem an das Installationsgerät angeschlossen Bussystem in Verbindung steht.

## Claims

1. Electric/electronic installation device, in particular for building system engineering, with a cover frame (3) and a base element (1) located on a supporting ring (2) and a lighting facility located on the base element (1), with the lighting facility featuring a printed circuit board (4) equipped with at least one light-emitting diode (5) and further electronic components (5), and with at least one light guide element (7) being assigned to the printed circuit board (4) when it is operatively connected to the light-emitting diode (5), and with the printed circuit board (4) and the first light guide element (7) being retained by a housing (9) which is arranged with its basic housing area (10) below the support ring (2) and to which at least one housing funnel (11) is moulded on for the purpose of accommodating the first light guide element (7) and reaches to the upper side (14) of the support ring (2), and with at least one second light guide element (15) being provided which is located on the upper side (14) of the supporting ring (2) and which is attached with its light in-coupling area (16) directly to the first light guide element (7) and with its light out-coupling area (18) directly to a light aperture (19) provided on the cover frame (3).

2. Electric/electronic installation device in accordance with Claim 1, **characterised in that** the printed circuit board (4) is equipped with at least two light-emitting diodes (5) and that each light-emitting diode (5) is allocated to a first light guide element (7) and that each of the first light guide elements (7) is held by a housing funnel (11).

3. Electric/electronic installation device in accordance with Claim 1 or Claim 2, **characterised in that** retention means (20) which come into operative connection with each other are moulded onto the housing (9) and to the base element (1).

4. Electric/electronic installation device in accordance with any of Claims 1 to 3 **characterised in that** catching means (21) which come into operative connection with each other are moulded onto the housing (9) and to the base element (1).

5. Electric/electronic installation device in accordance with any of Claims 1 to 4, **characterised in that** electrical contact elements are held on the housing (9), which, for the purpose of supplying energy to the lighting facility, are connected to the printed circuit board (4) on the one hand and electroconductively to electrical contact elements provided on the base element (1) on the other hand.

6. Electric/electronic installation device in accordance with any of Claims 1 to 4, **characterised in that** the lighting facility is provided with flexible connecting cables (22) for the purpose of attaching it to a power supply.

7. Electric/electronic installation device in accordance with any of Claims 1 to 6, **characterised in that** at least one carrier (23) of a transparent design is allocated to the second light guide element (15) for the purpose of supporting a labelling foil.

8. Electric/electronic installation device in accordance with any of Claims 1 to 7, **characterised in that** at least one carrier of a transparent design is allocated to the light emission window (19) of the cover frame (3) for the purpose of supporting a labelling foil.

9. Electric/electronic installation device in accordance with any of Claims 1 to 8, **characterised in that** the lighting facility features at least one light-emitting diode (5) which is designed as a tricolour light-emitting diode.

10. Electric/electronic installation device in accordance with any of Claims 1 to 9, **characterised in that** at least one light-emitting diode (5) of the lighting facility communicates with a bus system which is connected to the installation device.

## Revendications

1. Appareil d'installation électrique/électronique, en particulier pour les installations techniques systémiques des bâtiments et la domotique, avec un cache (3) et un élément socle (1) fixé à un anneau porteur (2), et un dispositif d'éclairage fixé à l'élément socle (1), ce dispositif d'éclairage présentant une carte à circuits imprimés électrique (4) équipée d'au moins une diode électroluminescente (5) et d'autres éléments électroniques (6), étant attribué à la carte à circuits imprimés (4) en relation avec la diode électroluminescente (5), au moins un premier élément de guidage de la lumière (7), et un boîtier (9) accueillant la carte à circuits imprimés électrique (4) et le premier élément de guidage de la lumière (7), boîtier dont la base (10) est placée au-dessous de l'anneau porteur (2), et sur lequel est formé au moins un conduit (11) prévu pour accueillir le premier élément de guidage de la lumière (7), conduit allant jusqu'au côté supérieur (14) de l'anneau porteur (2), au moins un second élément de guidage de la lumière (15) étant prévu, élément fixé sur le côté supérieur (14) de l'anneau porteur (2) et étant attribué, avec sa zone d'introduction de la lumière (16), directement au premier élément de guidage de la lumière (7), et, avec sa zone de sortie de la lumière (18), à une fenêtre de sortie de la lumière (19) existant dans le cache (3).

2. Appareil d'installation électrique/électronique selon la revendication 1, **caractérisé en ce que** la carte à circuits imprimés électrique (4) est équipée d'au moins deux diodes électroluminescentes (5), et **en ce que** est attribué à chaque diode électroluminescente (5) un premier élément de guidage de la lumière (7), et **en ce que** chacun des premiers éléments de guidage de la lumière (7) est accueilli par un conduit (11).

3. Appareil d'installation électrique/électronique selon la revendication 1 ou 2, **caractérisé en ce que** des éléments de maintien (20) jouant ensemble sont moulés ou formés sur le boîtier (9) et l'élément socle (1).

4. Appareil d'installation électrique/électronique selon l'une des revendications 1 à 3, **caractérisé en ce que** des éléments encliquetants (21) jouant ensemble sont moulés ou formés sur le boîtier (9) et l'élément socle (1).

5. Appareil d'installation électrique/électronique selon l'une des revendications 1 à 4, **caractérisé en ce que** sont en place, pour l'alimentation en énergie du dispositif d'éclairage au niveau du boîtier (9), d'une part des pièces de contact en relation avec la carte à circuits imprimés électrique (4) et d'autre part, conduisant l'électricité, des pièces de contact électriques entrant en relation avec des contacts électriques existants au niveau de l'élément socle (1).

6. Appareil d'installation électrique/électronique selon l'une des revendications 1 à 4, **caractérisé en ce que** le dispositif d'éclairage est muni de câbles de raccordement flexibles (22) pour le raccordement à l'alimentation en énergie.

7. Appareil d'installation électrique/électronique selon l'une des revendications 1 à 6, **caractérisé en ce que** au moins un support transparent (23) est attribué au second élément de guidage de la lumière (15) permettant d'accueillir une feuille plastique de marquage.

8. Appareil d'installation électrique/électronique selon l'une des revendications 1 à 7, **caractérisé en ce que** au moins un support transparent est attribué à la fenêtre de sortie de la lumière (19) du cache (3) permettant d'accueillir une feuille plastique de marquage.

9. Appareil d'installation électrique/électronique selon l'une des revendications 1 à 8, **caractérisé en ce que** le dispositif d'éclairage présente au moins un diode électroluminescente (5) de type tricolore.

10. Appareil d'installation électrique/électronique selon l'une des revendications 1 à 9, **caractérisé en ce que** au moins une diode électroluminescente (5) du dispositif d'éclairage est en relation avec un système de bus raccordé à l'appareil d'installation.
